# EUROPEAN PATENT APPLICATION

(11) **EP 1 965 311 A1**
(43) Date of publication of application: **03.09.2008**
(21) Application number: 07103363.3
(22) Date of filing: 01.03.2007
(51) Int. Cl.: G06F 17/22

(54) **System and method for transformation of syndicated content for mobile delivery**

(60) Divisional application: 08151615.5
(71) Applicant: Research In Motion Limited, Waterloo, Ontario N2L 3W8 (CA)
(72) Inventor: Shenfield, Michael, Richmond Hill, Ontario L4C 3S9 (CA)
(74) Representative: Rickard, David John

(57) **Abstract**

A method and system for embedding metadata for mobile delivery into a syndicated content feed, the method having the steps of receiving content from a syndicated content provider; embedding into the content the metadata using a standard schema extension mechanism, thereby creating modified content; and publishing the modified content. Also, a delivery server and a method within the delivery server to repackage content into a single format wrapped content envelope for delivery.

## Description

The present method and system relate generally to dynamic content delivery in a mobile environment and, in particular, to delivery of content of a variety of formats.

Users of mobile devices or mobile user equipment (UE) are increasingly becoming more sophisticated in terms of the functionality that they require from their mobile devices and the way that they access data from the mobile devices.

Dynamic content delivery allows users to have information or data pushed to them rather than having to go and seek out the data. Examples of data could include stock quotes, weather updates, traffic updates, dynamic wallpaper, ads, applications or other data desirable to a user.

Current technologies for mobile devices such as wireless application protocol (WAP) have the ability to push content. However, WAP requires websites to be rewritten to satisfy the wireless application protocol and provide users with a uniform site that does not change to accommodate a user's capabilities to view a site.

Other alternatives include SMS based push and broadcast or cell broadcast. In the broadcast case, delivery cannot be customized to the needs of a particular user or the capabilities of a particular device. The systems therefore have no intelligence associated with them. A better solution is required for mobile devices.

A problem further arises when content is provided in different formats. A delivery system needs to be capable of delivering the content regardless of the format.

### GENERAL

The present system and method may provide for the transformation of syndicated content for a mobile delivery. Specifically, a content publisher may be placed between syndicated content providers and delivery server, where the content publisher is adapted to insert mobile device metadata to facilitate mobile delivery. The content publisher may then publish the modified syndicated content at the delivery server. As will be appreciated, by adding mobile delivery metadata, the content publisher does not need to alter existing syndicated content when publishing. The model may ensure that the same content could be delivered to both wired and wireless clients.

A content publisher, as described herein, may be a logical entity that may be part of the content provider or may be a separate entity entirely.

In particular, the content publisher may be adapted to receive content from a syndicated content provider in an XML based syndicated feed in a preferred embodiment. Such an XML based syndicated feed could, for example, include RSS or Atom. The content publisher may add metadata at the earliest opportunity within the syndicated content. The metadata in a preferred embodiment may comprise a specified namespace defining XML elements that contain mobile delivery metadata. The namespace URL may point to XML schema document that defines these elements (i.e. their names, types, valid values, etc.).

Once the content publisher publishes the content that has been modified by adding metadata, a delivery server can then retrieve the content, repackage it into a single format for delivery to various delivery clients. Preferably, the repackaging involves extracting any metadata that was added by a content provider and wrapping this metadata around the syndicated content. The wrapped content can then be delivered to the delivery client regardless of the content that is wrapped.

Non-syndicated content can similarly be wrapped. In one embodiment non-syndicated content can be found in an enveloped metadata model where it has previously been wrapped in metadata. In this case, the delivery server merely needs to extract metadata targeted for the delivery server. If the non-syndicated content is not in an enveloped model, the delivery server can wrap the content in default metadata that is derived from default channel settings.

The present disclosure therefore may provide a method for embedding metadata for mobile delivery into a syndicated content feed, the method comprising the steps of receiving content from a syndicated content provider; embedding into the content the metadata using a standard schema extension mechanism, thereby creating modified content; and publishing the modified content.

The present disclosure may further provide a method for repackaging content at a delivery server for delivery to a mobile device comprising the steps of retrieving published content having embedded metadata and embedded content; extracting from the published content the embedded metadata; wrapping the embedded content in the extracted metadata, creating wrapped content; and storing the wrapped content for delivery.

The present disclosure may further provide a content publisher adapted to embed metadata into a syndicated content feed for mobile delivery, the content publisher comprising a receiver adapted to receive content from a syndicated content provider; means for embedding into the content the metadata using a standard schema extension mechanism, thereby creating modified content; and publishing means adapted to publish the modified content.

The present disclosure may still further provide a delivery server adapted to repackage content for delivery to a mobile device comprising retrieving means adapted to retrieve published content having embedded metadata and embedded content; extracting means adapted to extract from the published content the embedded metadata; wrapping means adapted to wrap the embedded content in the extracted metadata, creating wrapped content; and storage adapted to store the wrapped content for delivery.

### BRIEF DESCRIPTION OF THE DRAWINGS

The present disclosure will be better understood with reference to the drawings in which:
**Figure 1** is a block diagram showing logical components within a delivery framework;
**Figure 2** is a block diagram illustrating flow of metadata between the logical components of **Figure 1****;**
**Figure 3** is a block diagram showing an envelope model for content and metadata;
**Figure 4** is a block diagram of a server side of a delivery framework in which a content publisher has been added;
**Figure 5** is a block diagram showing a server side delivery framework having multiple content publishers;
**Figure 6** is a block diagram of non-syndicated content within a metadata envelope;
**Figure 7** is a flow chart illustrating a method for wrapping content in metadata; and
**Figure 8** is an exemplary mobile device that can be used in association with present method and system.

### DESCRIPTION OF PREFERRED EMBODIMENTS

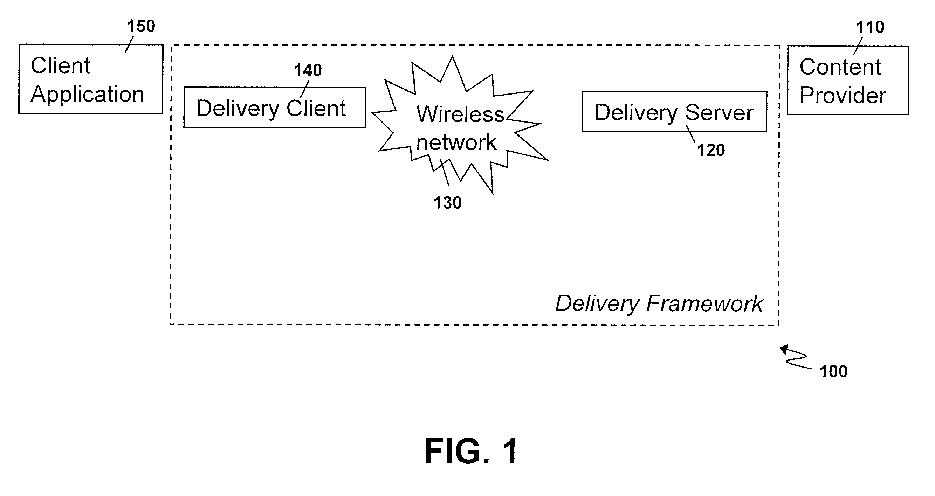

Reference is now made to **Figure 1****.** A push system for delivering dynamic content to a client application is illustrated. The system of **Figure 1** is a simplified system and shows logical components that need to be in a dynamic content delivery architecture. However, as will be appreciated by those skilled in the art, other components could exist or various components could be grouped together.

Architecture **100** includes a content provider **110.** Content provider **110** is arranged to provide dynamic content to users. Examples can include, for example, a website selling books. Content provider **110** may periodically provide a list of newly released books which can either be sent to subscribers that are subscribed to the website or to a delivery server that manages subscriptions.

A delivery server **120** communicates over wireless network **130** with a delivery client **140** that is located on a mobile device in a preferred embodiment. Delivery client **140** receives the content that is being delivered from content provider **110** and can communicate the content with a client application **150,** which ultimately consumes the content.

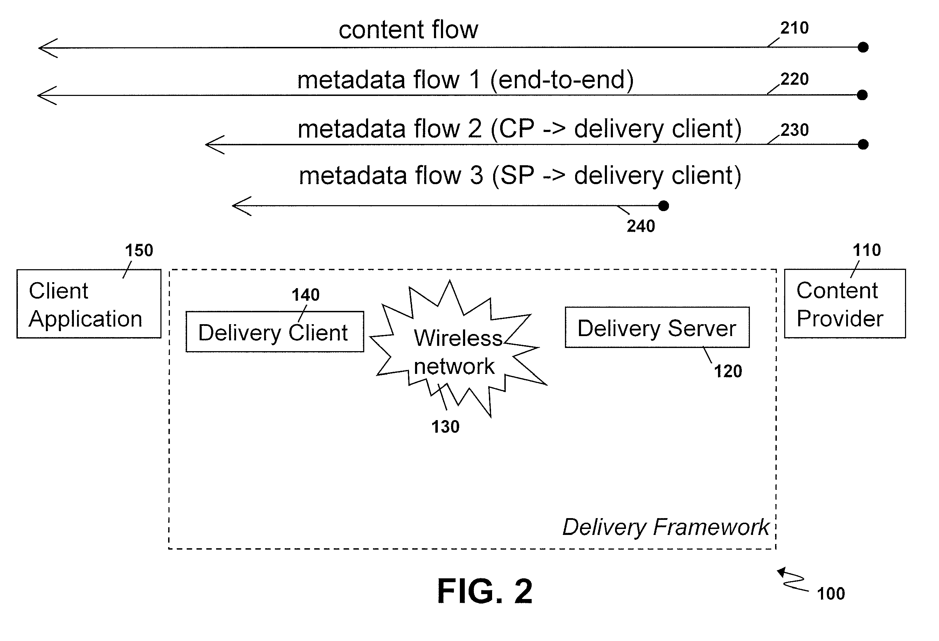

Reference is now made to **Figure 2****.** In order to add intelligence to a system, content is associated with metadata. Metadata, in this case, is defined as data that can be used by a processing element to manipulate the content. As will be appreciated, a generic push system requires metadata to allow various content providers and applications to exist within the system. The metadata can be in various forms, including processing parameters or rules, or a processing handler, code or reference provided directly or a link to a processing handler, code or rules in another location.

As can be see in **Figure 2****,** content passes from content provider **110** to a client application **150,** as illustrated by arrow **210.** Metadata, which provides instructions to various components within the architecture **100,** can also pass between components within architecture **100,** usually along with the content. For example, arrow **220** illustrates metadata that originates at the content provider and is transparent to the delivery system until it reaches a client application **150.**

Arrow **230** shows metadata created by a content provider **110** that is intended for delivery client **140** and thus only flows to the delivery client **140.**

Arrow **240** illustrates metadata generated by delivery server **120** and intended for delivery client **140,** and thus is first associated with the content at delivery server **120** and stripped from the content at delivery client **140.** Examples of where this could occur include agreements between a user and a service provider regarding a billing plan and the level of service to be provided, where the service provider can use the metadata to limit the services available or provide enhanced services.

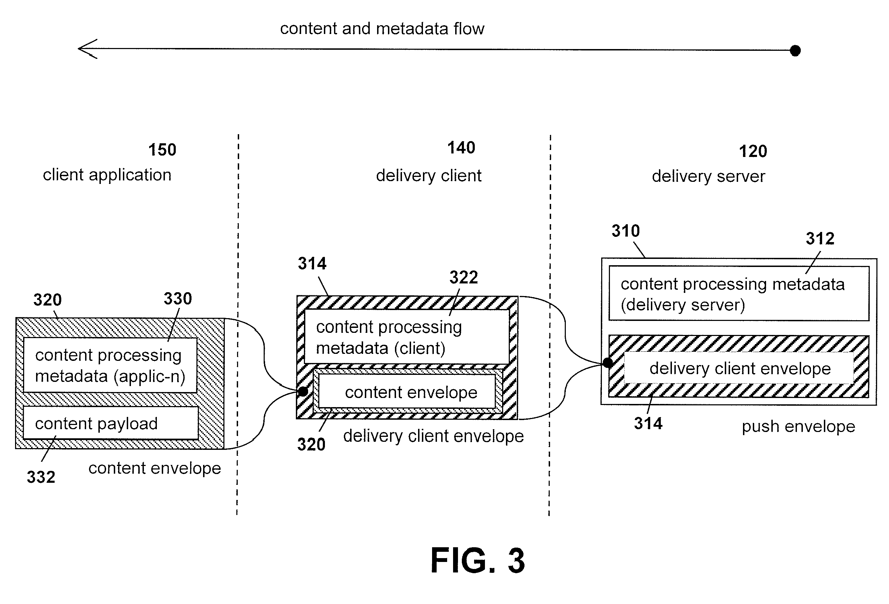

Reference is now made to **Figure 3. Figure 3** illustrates a multilayered envelope model for content metadata.

A delivery server **120** receives a push envelope **310** that includes content processing metadata **312** for the delivery server **120** and a delivery client envelope **314.** The delivery server **120** extracts the content processing metadata **312** and uses this metadata to process delivery client envelope **314.** Metadata **312** dictates to delivery server **120** what to do with the delivery client envelope **314.**

Delivery client envelope **314** is passed to delivery client **140,** where it is broken into a content envelope **320** and a content processing metadata **322.** Content process metadata **322** is used by delivery client **140** to process the content envelope **320.** For example, this can be used to instruct delivery client **140** to perform a replacement of previously delivered content envelope **320** with the latest envelope if client application **150** is only interested in the latest version of the content.

Content envelope **320** is passed to client application **150.** Content envelope **320** includes content processing metadata **330** for the application and content payload **332** that is to be consumed by client application **150.**

As will be appreciated by those skilled in the art, the nesting of envelopes in accordance with **Figure 3** provides for a rich dynamic environment in which processing can occur at any processing element of the architecture and in which the content provider **110** can specify how specific content is to be dealt with. In one embodiment, metadata is directed to a particular logical element and is opaque to other processing elements.

As will further be appreciated, metadata may only be included for various stages of the delivery of content. For example, metadata may only be required between the delivery server **120** and delivery client **140** and thus no metadata for client application **150** would be included.

Other alternatives would be evident to those skilled in the art.

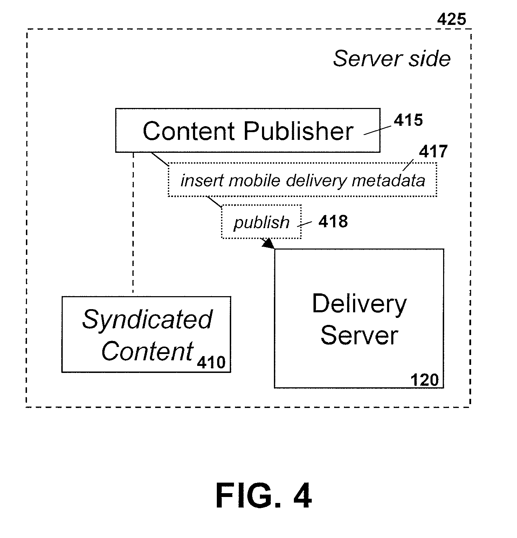

As will further be appreciated, content provider **110** in some cases will be a generic syndicated content provider and will have no ability or intention to add metadata for the content that is being delivered. In this case, a content publisher, as described with reference to **Figures 4****,** **5****,** **6** and **7** is provided.

Reference is now made to **Figure 4****.** A syndicated content provider **410** includes content that a mobile user desires. A content publisher **415** retrieves content from a syndicated content provider **410.** The content publisher **415** is adapted to insert mobile delivery metadata **417** and publish **418** content. This content is then retrieved by delivery server **120** and delivered to a mobile device. As will further be appreciated, all of this is performed on server side **425** as opposed to the client side (which includes delivery client **140** and client application **150** as illustrated in **Figure 1****).**

As will be appreciated by those skilled in the art, content publisher **415** may be part of syndicated content provider **410** or may be a separated entity.

An example of inserting mobile delivery metadata **417** is provided utilizing the code segments below. In the code segment below, the example uses RSS 2.0 code and content provided by syndicated content **410** is illustrated as:

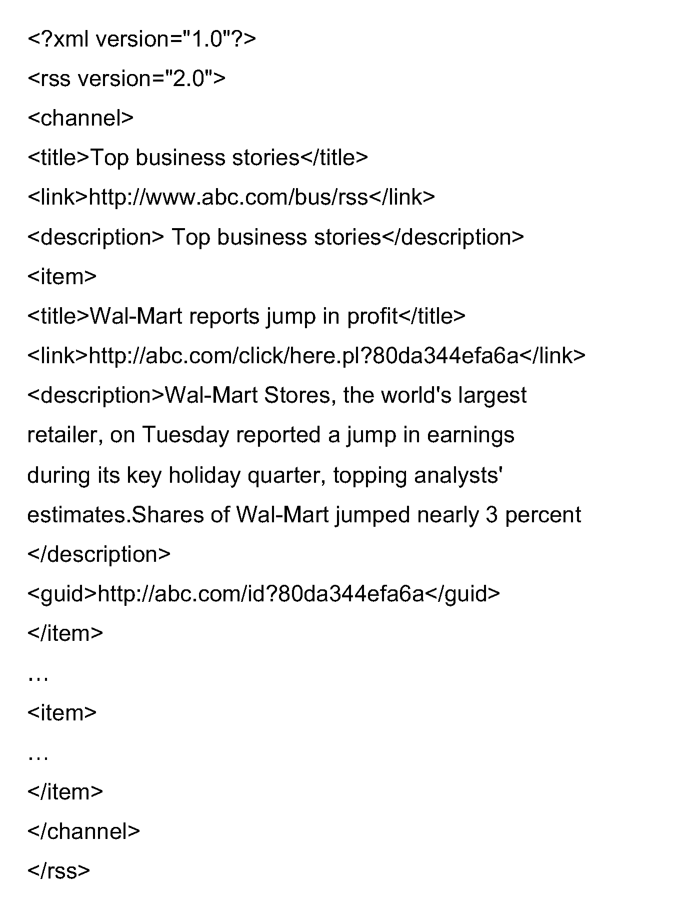

As will be appreciated by those skilled in the art, the above content could be delivered to both wired and wireless clients. The above code segment merely illustrates an example of a news report for a financial news provider.

Content publisher **415** receives the above content and inserts mobile delivery metadata **417**. This is illustrated in the segment below as:

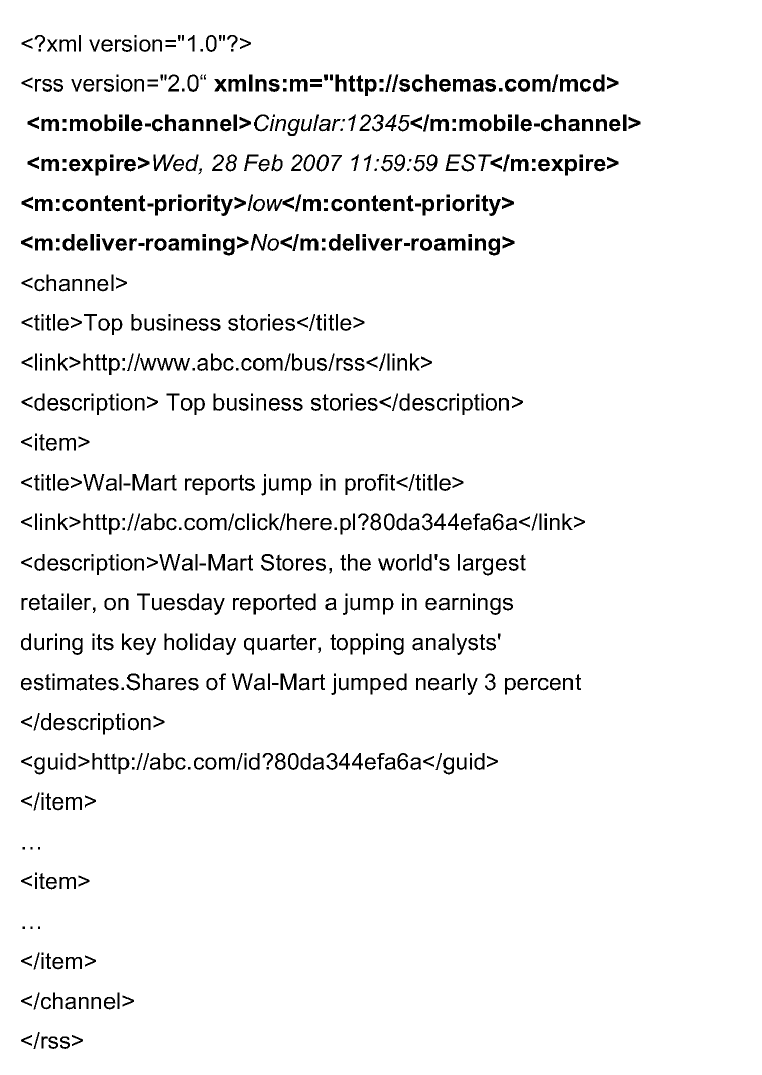

As illustrated by the bold content, the insertion comprises adding metadata for the delivery server. In particular, in the example above, the XML includes adding a link to a XML namespace m (xmlns:m="http://schemas.com/mcd). The XML namespace m points to an XML schema file that defines various parameters including a mobile channel that should be used, when the content is to expire, the priority of the content and whether the content should be delivered while roaming.

The above example metadata provides that a certain mobile channel should be used for the delivery of the content, as specified by **<m:mobile-channel>***Cingular:12345****<*/m:mobile-channel>.** It also specifies when the content will expire **(<m:expire>***Wed, 28 Feb 2007 11:59:59 EST***</m:expire>**), that the content priority is low **(<m:content.priority>***low***</m:content-priority>)** and that it should be delivered while roaming **(<m:deliver-roaming>***No***</m:deliver-roaming>).**

The parameters for mobile delivery could be set at the content publisher **415** based on the syndicated content **410.** Further, preferences by the mobile device could be provided to content publisher **415** in order to set the parameters.

As will be appreciated, the above are merely examples of various parameters and namespaces that could be specified to delivery server **120** and other parameters and namespaces would be within the scope of the present disclosure. Further, the examples outlined above with relation to namespace m do not necessarily need to be inserted and are merely provided for illustration purposes.

In a further example, content could be in Atom 1.0 format. An example of the same content as above in Atom 1.0 format is:

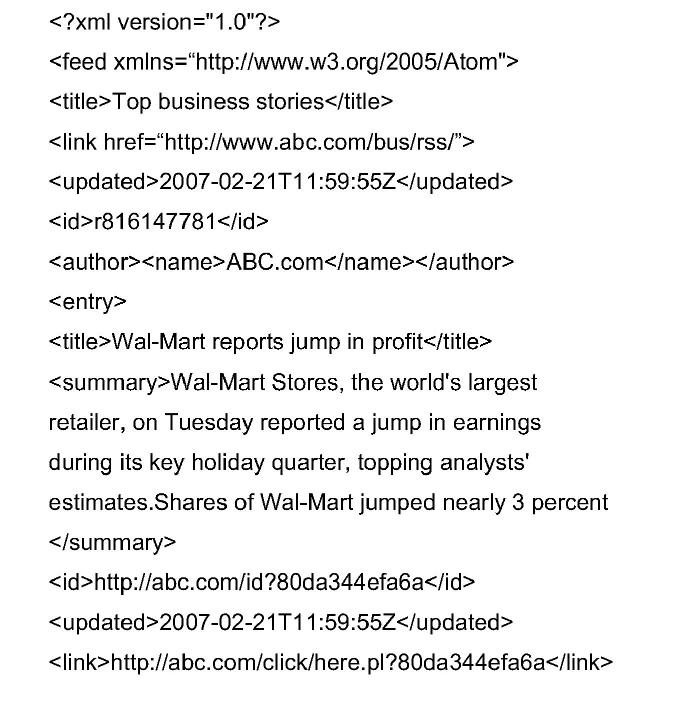

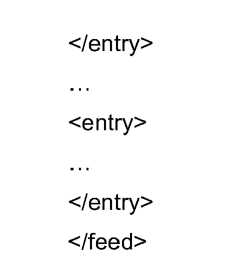

The content publisher **415** could insert metadata in accordance with the following:

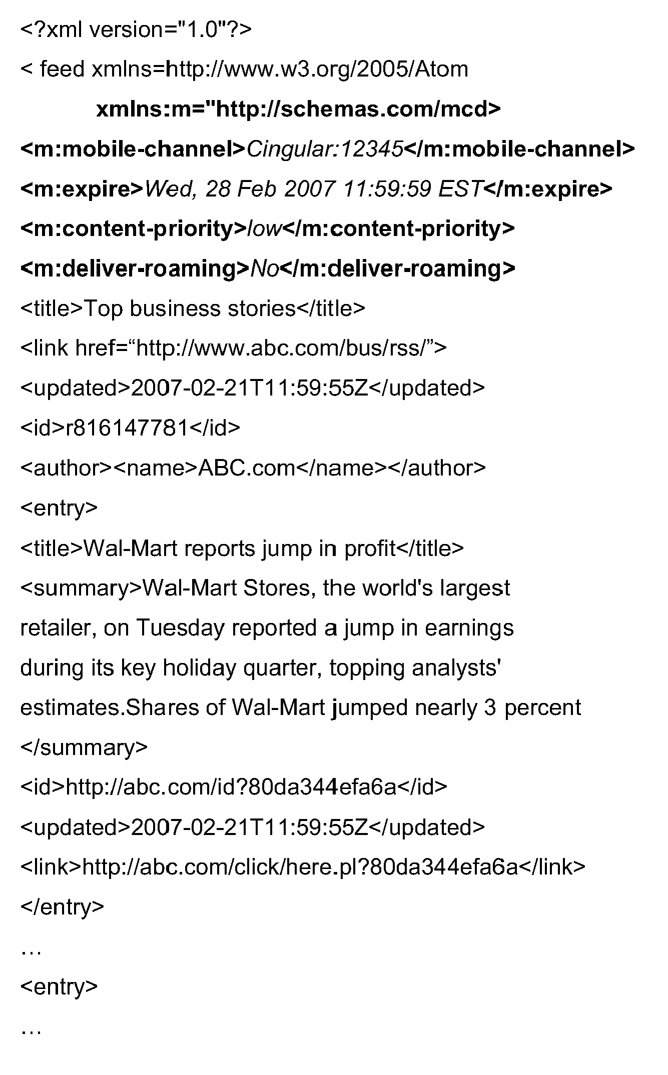

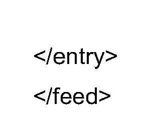

As indicated above with reference to the bold insertion, metadata is inserted into the content. Specifically, the same metadata that was inserted in the RSS2.0 feed is also inserted into the present Atom 1.0 content feed.

From both the RRS2.0 and the Atom 1.0 examples, it will be appreciated that the content publisher does not touch or open the content and inserts metadata at the earliest opportunity within the content stream. In this case, it is immediately after the RSS version is specified in the RSS2.0 feed and after the name space for the Atom content is defined for the Atom 1.0 content.

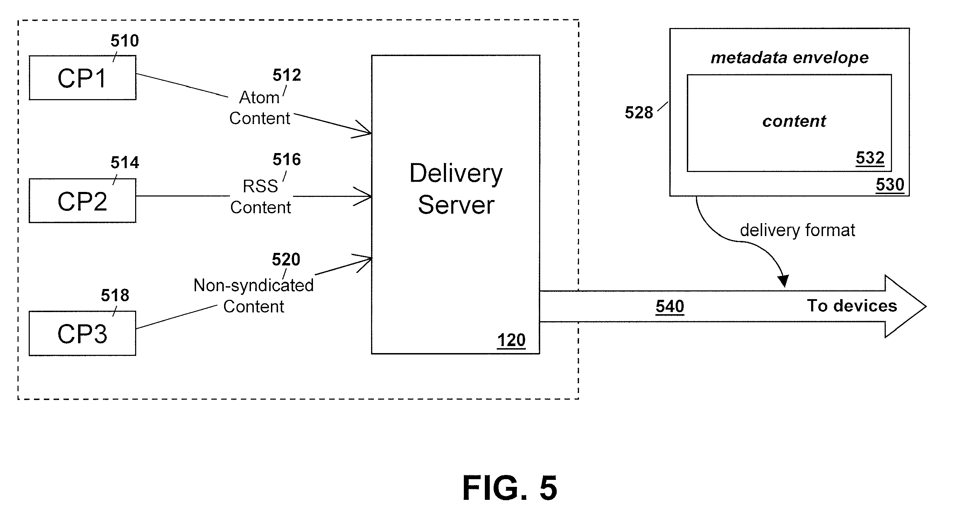

Reference is now made to **Figure 5****.** To ensure interoperability and to simplify implementation of delivery clients on devices, only a single, common delivery format is supported in a preferred embodiment. The content is wrapped with a metadata envelope such as an XML envelope containing delivery metadata. Delivery server **120** must repackage syndicated feeds into a common delivery format.

As illustrated in **Figure 5****,** a first content publisher **510** produces Atom content **512.**

A second content publisher **514** produces RSS content **516.**

A third content publisher **518** produces non-syndicated content **520.** Non-syndicated content **520** could be anything, including binary, video, and text, among others.

Delivery server **120** gets Atom content **512,** RSS content **516** and non-syndicated content **520** and is adapted to repackage the feeds into a common delivery format. As illustrated in **Figure 5****,** metadata envelope **530** is wrapped around content **532,** which can include any of the content **512, 516** or **520.** This is passed in single delivery format **540** to devices expecting the content. Thus, as illustrated in **Figure 5****,** three formats are converted to one format for delivery to the device.

The repackaging for delivery comprises taking the published content that was published by either content provider **510,** content provider **514** or content provider **518** and converting it for delivery. This involves, for example, taking the code segment below and converting it to an envelope model **528** from **Figure 5****.**

Thus, as provided above, published content could be:

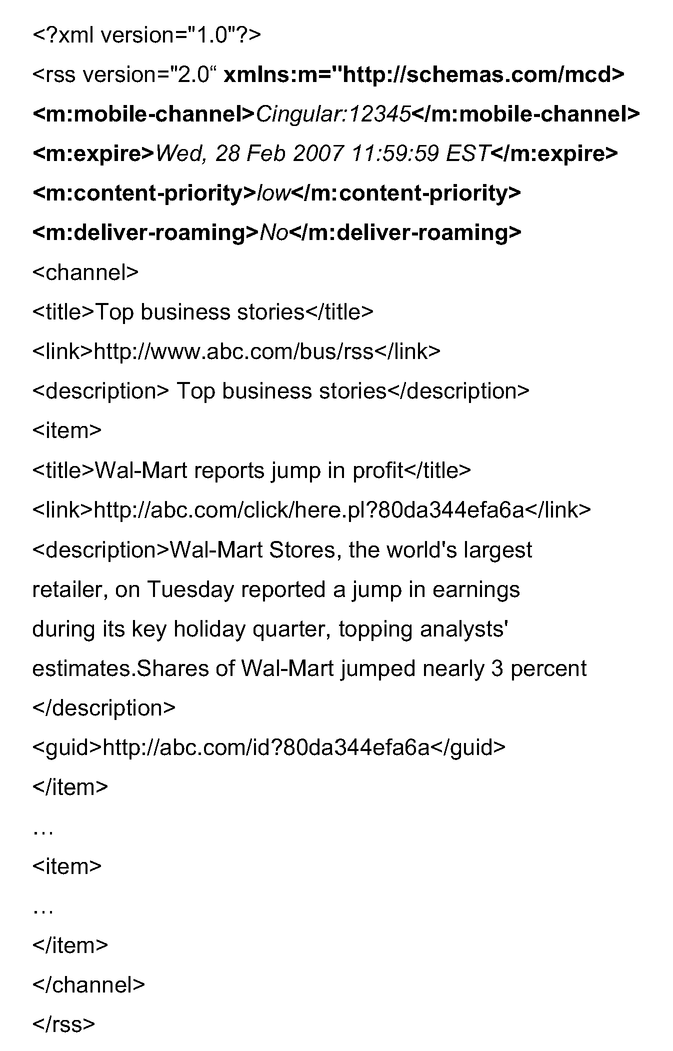

Delivery server repackages the content to create an enveloped model **528** which includes the metadata envelope **530** and the content **532.** An example of the code could be:

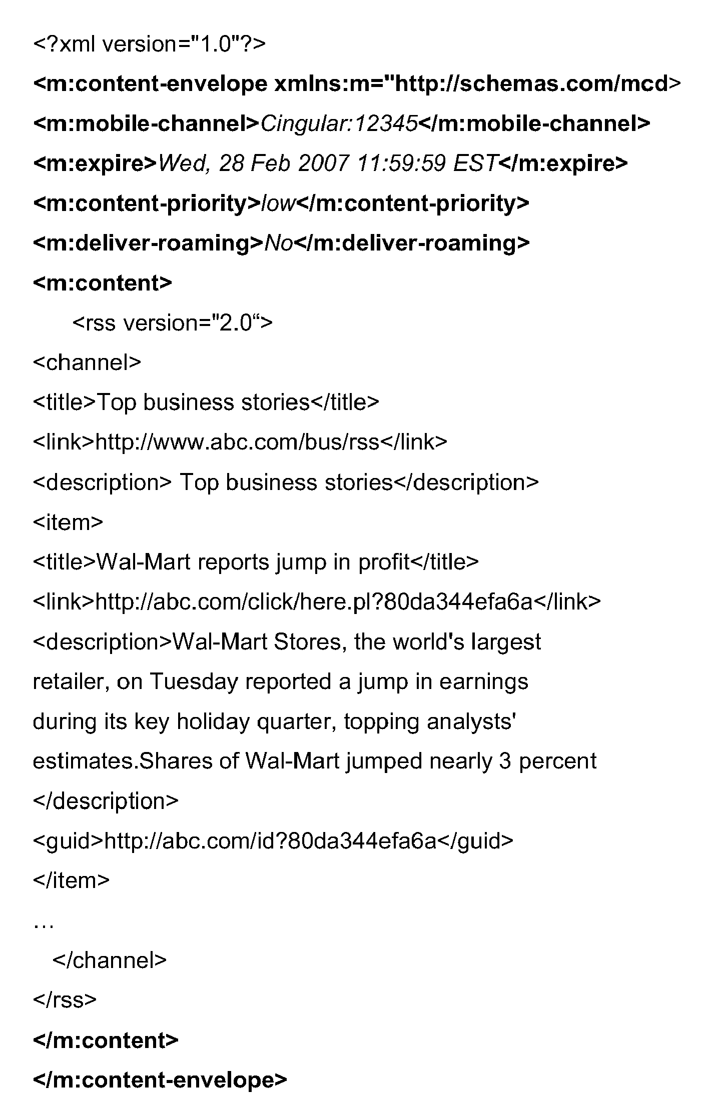

From the above, the bold is the metadata envelope **530** and the non-bold is the content. The content, as will be appreciated, has not been touched by either the content publisher or the delivery server **120.**

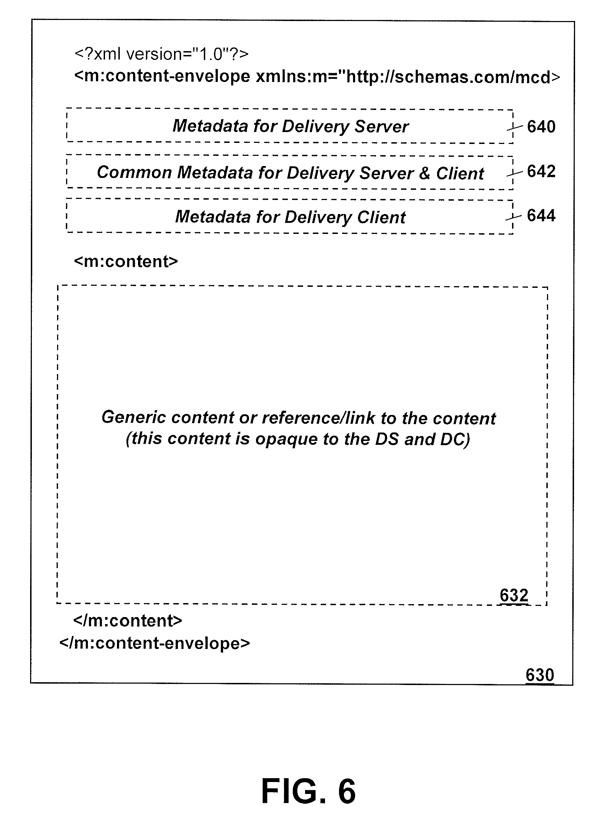

For non-syndicated content **520,** a similar process occurs. Specifically, referring to **Figure 6****,** a non-syndicated packaging could include the content **632** with a metadata envelope **630.** In this case, the metadata envelope could include metadata for the delivery server **640;** common metadata for both the delivery server and the client **642;** and metadata for the delivery client **644.**

The metadata for the delivery server is extracted by the delivery server prior to the delivery between the delivery server and the delivery client. Common metadata for the delivery server and delivery client **642** is read by the delivery server and can be processed. Examples include expiry dates for content. If content is not delivered by a certain date, then the delivery server could discard the packet.

Conversely, the common metadata could be used at the client side if the content is delivered to the client but the client application has not been opened in order to have the delivery client deliver the content to the content application. In this case, the delivery client could read the expiry date and could discard the content if the expiry date has passed.

Metadata for the delivery client **644** remains in the non-syndicated content package and is passed to the delivery client.

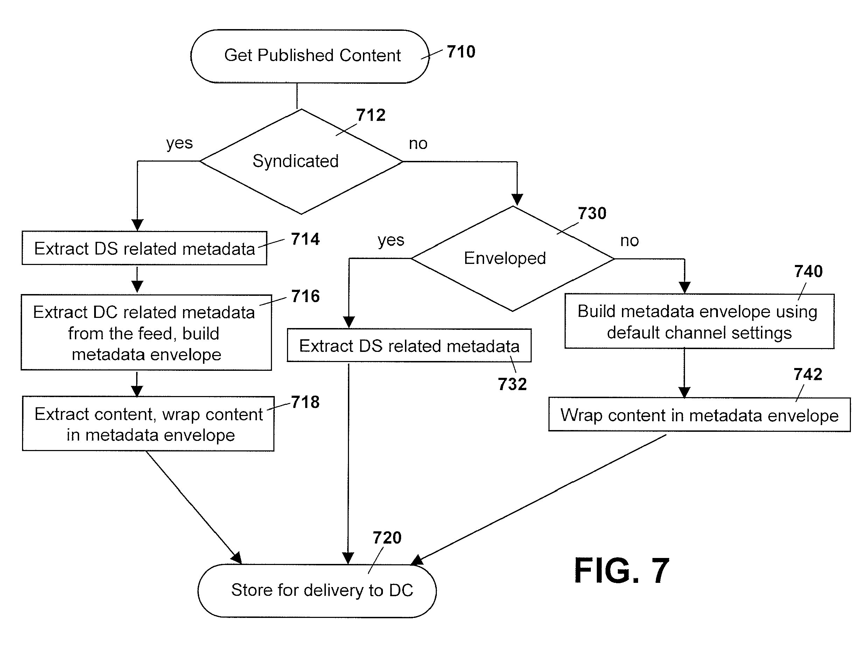

The above can be better seen with reference to **Figure 7. Figure 7** shows a flow chart for packaging content. As will be appreciated, the delivery server generally performs this method.

In step **710,** the method comprises getting the published content. Step **712** is a check to see whether or not the content is syndicated. If yes, the process proceeds to step **714** in which delivery server related metadata is extracted from the content.

The process then proceeds to step **716** in which delivery client related metadata is extracted from the feed and a metadata envelope is built.

In step **718,** content is then extracted and the content is wrapped in the metadata envelope created in step **716.**

The process then proceeds to step **720** in which the content that is wrapped in the metadata envelope is stored for delivery to the delivery client.

If, in step **712,** it is found that the content is not syndicated, the process then proceeds to step **730.** In step **730** a check is made to see whether or not the content is enveloped. If yes, the process proceeds to step **732** in which delivery server related metadata is extracted from the envelope content and the delivery server can then process the content in relation to the extracted metadata.

From step **732,** the process proceeds to step **720** in which the remaining content that is enveloped is stored for delivery to a delivery client.

If, in step **730,** it is found that the content is not enveloped, the process proceeds to step **740.** In step **740,** a metadata envelope is built using default channel settings. Thus, for example, a delivery server will include default settings for a particular delivery client or a particular mobile device associated with the delivery client. The metadata envelope can thus be created using these default channel settings.

In step **742,** the content is wrapped in the metadata envelope that was created in step **740** and the process then proceeds to step **720** in which the wrapped content is stored for delivery to the delivery client.

Thus, from **Figure 7****,** data in various formats whether syndicated or enveloped, can be wrapped in metadata and stored for delivery to a delivery client. The data stored in step **720** is in a uniform format including an envelope wrapped around the content in order to provide for uniform delivery to a delivery client, simplifying the implementation of a delivery client on a mobile device.

The above therefore provides for the embedding of mobile delivery metadata at publishing at the delivery server. A content publisher embeds the metadata for control of mobile delivery inside the syndicated content feed. The metadata is embedded using a standard XML scheme extension mechanism in a

### preferred embodiment.

Further, the content that is published with the metadata is then transformed at the delivery server into a delivery server - delivery content delivery format. Any form of syndicated content is contemplated, and in a particular example, an RSS or Atom or other XML based syndicated content feed is contemplated. This RSS, Atom or other XML based syndicated content is transformed into an XML envelope format for delivering to a delivery client.

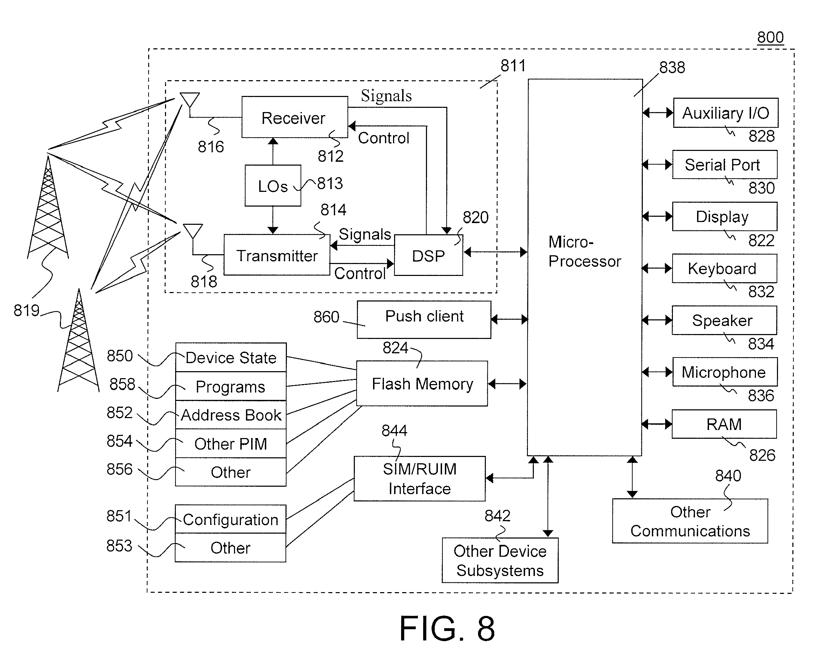

The delivery client and the content client or content application can be found on any mobile device. One particular mobile device that is illustrated in the example is provided in **Figure 8****.** Reference is now made to **Figure 8****.**

**Figure 8** is a block diagram illustrating a mobile station apt to be used with preferred embodiments of the apparatus and method of the present application. Mobile station **800** is preferably a two-way wireless communication device having at least voice and data communication capabilities. Mobile station **800** preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station **800** is enabled for two-way communication, it will incorporate a communication subsystem **811,** including both a receiver **812** and a transmitter **814,** as well as associated components such as one or more, preferably embedded or internal, antenna elements **816** and **818,** local oscillators (LOs) **813,** and a processing module such as a digital signal processor (DSP) **820.** As will be apparent to those skilled in the field of communications, the particular design of the communication subsystem **811** will be dependent upon the communication network in which the device is intended to operate.

Network access requirements will also vary depending upon the type of network **819.** In some CDMA networks network access is associated with a subscriber or user of mobile station **800.** A CDMA mobile station may require a removable user identity module (RUIM) or a subscriber identity module (SIM) card in order to operate on a CDMA network.. The SIM/RUIM interface **844** is normally similar to a card-slot into which a SIM/RUIM card can be inserted and ejected like a diskette or PCMCIA card. The SIM/RUIM card can have approximately 64K of memory and hold many key configuration **851,** and other information **853** such as identification, and subscriber related information.

When required network registration or activation procedures have been completed, mobile station **800** may send and receive communication signals over the network **819.** As illustrated in **Figure 8****,** network **819** can consist of multiple base stations communicating with the mobile device. For example, in a hybrid CDMA 1x EVDO system, a CDMA base station and an EVDO base station communicate with the mobile station and the mobile station is connected to both simultaneously. The EVDO and CDMA 1x base stations use different paging slots to communicate with the mobile device.

Signals received by antenna **816** through communication network **819** are input to receiver **812,** which may perform such common receiver functions as signal amplification, frequency down conversion, filtering, channel selection and the like, and in the example system shown in **Figure 8****,** analog to digital (A/D) conversion. A/D conversion of a received signal allows more complex communication functions such as demodulation and decoding to be performed in the DSP **820.** In a similar manner, signals to be transmitted are processed, including modulation and encoding for example, by DSP **820** and input to transmitter **814** for digital to analog conversion, frequency up conversion, filtering, amplification and transmission over the communication network **819** via antenna **818.** DSP **820** not only processes communication signals, but also provides for receiver and transmitter control. For example, the gains applied to communication signals in receiver **812** and transmitter **814** may be adaptively controlled through automatic gain control algorithms implemented in DSP **820.**

Mobile station **800** preferably includes a microprocessor **838** which controls the overall operation of the device. Communication functions, including at least data and voice communications, are performed through communication subsystem **811.** Microprocessor **838** also interacts with further device subsystems such as the display **822,** flash memory **824,** random access memory (RAM) **826,** auxiliary input/output (I/O) subsystems **828,** serial port **830,** one or more keyboards or keypads **832,** speaker **834,** microphone **836,** other communication subsystem **840** such as a short-range communications subsystem and any other device subsystems generally designated as **842.** Serial port **830** could include a USB port or other port known to those in the art.

Some of the subsystems shown in **Figure 8** perform communication-related functions, whereas other subsystems may provide "resident" or on-device functions. Notably, some subsystems, such as keyboard **832** and display **822,** for example, may be used for both communication-related functions, such as entering a text message for transmission over a communication network, and device-resident functions such as a calculator or task list.

Operating system software used by the microprocessor **838** is preferably stored in a persistent store such as flash memory **824,** which may instead be a read-only memory (ROM) or similar storage element (not shown). Those skilled in the art will appreciate that the operating system, specific device applications, or parts thereof, may be temporarily loaded into a volatile memory such as RAM 826. Received communication signals may also be stored in RAM **826.**

As shown, flash memory **824** can be segregated into different areas for both computer programs **858** and program data storage **850, 852, 854** and **856.** These different storage types indicate that each program can allocate a portion of flash memory **824** for their own data storage requirements. Microprocessor **838,** in addition to its operating system functions, preferably enables execution of software applications on the mobile station. A predetermined set of applications that control basic operations, including at least data and voice communication applications for example, will normally be installed on mobile station **800** during manufacturing. Other applications could be installed subsequently or dynamically.

A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network **819.** In a preferred embodiment, the PIM data items are seamlessly integrated, synchronized and updated, via the wireless network **819,** with the mobile station user's corresponding data items stored or associated with a host computer system. Further applications may also be loaded onto the mobile station **800** through the network **819,** an auxiliary I/O subsystem **828,** serial port **830,** short-range communications subsystem **840** or any other suitable subsystem **842,** and installed by a user in the RAM **826** or preferably a non-volatile store (not shown) for execution by the microprocessor **838.** Such flexibility in application installation increases the functionality of the device and may provide enhanced on-device functions, communication-related functions, or both. For example, secure communication applications may enable electronic commerce functions and other such financial transactions to be performed using the mobile station **800.**

In a data communication mode, a received signal such as a text message or web page download will be processed by the communication subsystem **811** and input to the microprocessor **838,** which preferably further processes the received signal for output to the display **822,** or alternatively to an auxiliary I/O device **828.** A delivery client **860,** which could be equivalent to delivery client **140** could also process the input.

A user of mobile station **800** may also compose data items such as email messages for example, using the keyboard **832,** which is preferably a complete alphanumeric keyboard or telephone-type keypad, in conjunction with the display **822** and possibly an auxiliary I/O device **828.** Such composed items may then be transmitted over a communication network through the communication subsystem **811.**

For voice communications, overall operation of mobile station **800** is similar, except that received signals would preferably be output to a speaker **834** and signals for transmission would be generated by a microphone **836.** Alternative voice or audio I/O subsystems, such as a voice message recording subsystem, may also be implemented on mobile station **800.** Although voice or audio signal output is preferably accomplished primarily through the speaker **834,** display **822** may also be used to provide an indication of the identity of a calling party, the duration of a voice call, or other voice call related information for example.

Serial port **830** in **Figure 8****,** would normally be implemented in a personal digital assistant (PDA)-type mobile station for which synchronization with a user's desktop computer (not shown) may be desirable, but is an optional device component. Such a port **830** would enable a user to set preferences through an external device or software application and would extend the capabilities of mobile station **800** by providing for information or software downloads to mobile station **800** other than through a wireless communication network. The alternate download path may for example be used to load an encryption key onto the device through a direct and thus reliable and trusted connection to thereby enable secure device communication. As will be appreciated by those skilled in the art, serial port **830** can further be used to connect the mobile device to a computer to act as a modem.

Other communications subsystems **840,** such as a short-range communications subsystem, is a further optional component which may provide for communication between mobile station **800** and different systems or devices, which need not necessarily be similar devices. For example, the subsystem **840** may include an infrared device and associated circuits and components or a Bluetooth^{™} communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for embedding metadata for delivery in a mobile wireless environment into a syndicated content feed, the method comprising the steps of:
receiving content from a syndicated content provider;
embedding into the content the metadata using a standard schema extension mechanism, thereby creating modified content; and
publishing the modified content.

2. The method of claim 1, wherein the standard schema extension mechanism is an extensible mark-up language 'XML' schema extension mechanism.

3. The method of claim 2, wherein the XML schema extension mechanism utilizes an XML name space to specify delivery parameters.

4. The method of any one of claims 1 to 3, wherein the syndicated content feed is an RSS 2.0 or Atom 1.0 feed.

5. The method of any one of claims 1 to 4, wherein the metadata for delivery in a mobile wireless environment is embedded into the syndicated content feed before any syndicated content is embedded into said feed.

6. The method of claim 5, wherein the content is unaltered by the embedding step.

7. A method for repackaging content at a delivery server for delivery to a mobile device comprising the steps of:
retrieving published content having embedded metadata and embedded content;
extracting from the published content the embedded metadata;
wrapping the embedded content in the extracted metadata, creating wrapped content; and
storing the wrapped content for delivery.

8. The method of claim 7, wherein where no embedded metadata exists in the published content, said wrapping step substitutes default metadata for embedded metadata.

9. The method of claim 8, wherein the default metadata is created based on default channel settings for delivery to the mobile device.

10. The method of any one of claims 7 to 9, further comprising the steps of:
checking prior to the extracting step whether the published content is syndicated,
if yes, proceeding with the extracting, wrapping and storing steps;
if no, checking whether the published content is enveloped,
if yes, having the extracting step only extract metadata related to the delivery server and skipping the wrapping step;
if no, skipping the extracting step and utilizing default metadata, and proceeding with the wrapping and storing steps.

11. The method of any one of claims 7 to 10, wherein the published content is in different formats.

12. The method of claim 11, wherein the different formats are selected from Atom content, RSS content or non-syndicated content.

13. The method of any one of claims 7 to 12, wherein the wrapping step leaves the embedded content unaltered.

14. The method of any one of claims 7 to 13, further comprising the step of, prior to the wrapping step, adding metadata to the extracted metadata.

15. The method of any one of claims 7 to 14, wherein the wrapped content is in a single format.

16. The method of claim 15, wherein the single format is an extensible mark-up language 'XML' envelope format.

17. A content publisher adapted to embed metadata into a syndicated content feed for delivery in a mobile wireless environment, the content publisher comprising:
a receiver adapted to receive content from a syndicated content provider;
means for embedding into the content the metadata using a standard schema extension mechanism, thereby creating modified content; and
publishing means adapted to publish the modified content.

18. The content publisher of claim 17, wherein the standard schema extension mechanism comprises an extensible mark-up language 'XML' schema extension mechanism.

19. The content publisher of claim 18, wherein the XML schema extension mechanism is adapted to utilize an XML name space to specify delivery parameters.

20. The content publisher of any one of claims 17 to 19, wherein the syndicated content feed comprises an RSS 2.0 or Atom 1.0 feed.

21. The content publisher of any one of claims 17 to 20, wherein the publishing means is adapted to embed metadata for delivery in a mobile wireless environment before embedding any syndicated content.

22. The content publisher of claim 21, wherein the means for embedding is adapted to not alter the content.

23. A delivery server adapted to repackage content for delivery to a mobile device comprising:
retrieving means adapted to retrieve published content having embedded metadata and embedded content;
extracting means adapted to extract from the published content the embedded metadata;
wrapping means adapted to wrap the embedded content in the extracted metadata, creating wrapped content; and
storage adapted to store the wrapped content for delivery.

24. The delivery server of claim 23, wherein if no embedded metadata exists in the published content, the wrapping means is adapted to substitute default metadata for embedded metadata.

25. The delivery server of claim 24, wherein the wrapping means is adapted to substitute default metadata based on default channel settings for delivery to the mobile device.

26. The delivery server of any one of claims 23 to 25, further comprising:
checking means for checking whether the published content is syndicated or enveloped, wherein if the content is not syndicated but enveloped, said checking means adapted to prevent said wrapping means from wrapping the extracted content and to cause the extracting means to only extract metadata for the delivery server, and wherein if the checking means finds the content is not syndicated and not enveloped, the checking means adapted to instruct the wrapping means to utilize default channel settings.

27. The delivery server of any one of claims 23 to 26, wherein the published content comprises different formats.

28. The delivery server of claim 27, wherein the different formats comprise Atom content, RSS content or non-syndicated content.

29. The delivery server of any one of claims 23 to 28, wherein the wrapping means is adapted to leave the embedded content unaltered.

30. The delivery server of any one of claims 23 to 29, further comprising means to add metadata to any metadata extracted by the extracting means.

31. The delivery server of any one of claims 23 to 30, wherein the wrapped content comprises a single format.

32. The delivery server of claim 31, wherein the single format comprises an extensible mark-up language 'XML' envelope format.

33. A computer readable medium storing program instructions for causing a computing device to perform the method of any one of claims 1 to 6 or the method of any one of claims 7 to 16.
